# EUROPEAN PATENT APPLICATION

(11) **EP 0 530 816 A2**
(43) Date of publication of application: **10.03.1993**
(21) Application number: 92115110.6
(22) Date of filing: 03.09.1992
(51) Int. Cl.: G06F 11/00

(54) **Microprocessor with cache memory and trace analyzer therefor**

(30) Priority: 04.09.1991 JP 223247/91
(71) Applicant: NEC CORPORATION, Tokyo (JP)
(72) Inventor: Suzuki, Hiroaki, c/o NEC Corporation, Minato-ku, Tokyo (JP)
(74) Representative: Glawe, Delfs, Moll & Partner

(57) **Abstract**

A terminal externally indicating whether or not a cache memory included in a microprocessor is made valid is provided in the microprocessor. A trace analyzer responds to a signal on the terminal to change a tracing method of the microprocessor. As a result, debugging of a program to be executed in real time can be done easily.

## Description

### BACKGROUND OF THE INVENTION

### Field of the Invention

The present invention relates to a microprocessor with a cache memory and a trace analyzer for analyzing an operational history of the microprocessor.

### Description of the Prior Art

A microprocessor developed in the early 1970s was an arithmetic unit which analyzes an instruction to perform an arithmetic operation and/or control operation and was realized on a silicon chip. Performance of such microprocessor is more and more improved with improvement of LSI technology and expansion of market thereof and increase of higher needs, and one which can process words each 32 bits long is commercially available nowadays. Further, there are such microprocessors as having cache memories in addition to required constitutional components such as registers, arithmetic operation Circuits and control circuits, etc. A cache memory is a high speed, small capacity memory provided internally of a central processing unit to satisfy antinomic requirements of high speed and large capacity for an internal memory of a computer.

As such, debugging problem comes to the surface even for a microprocessor having increased complexity. Debugging in this kind of microprocessor is generally realized by a trace method, a trap method or a single-step method, although the trace method is suitable for a total debugging. As is well known, trace is performed by a trace analyzer and a trace memory provided externally of a central processing unit or processor executing a program to be debugged. Such trace analyser stores addresses of instructions to be executed by the microprocessor one by one in the trace memory so that a debugging is possible later by analyzing the content of the memory.

However, unless special means is provided, the trace analyzer can not directly detect data necessary for trace method since a memory access is limited to an inner portion of the microprocessor during the cache memory is in service. Therefore, it has been conventional that trace is performed after the cache memory is made invalid.

In such case, however, an operation of a microprocessor is made substantially different in instruction execution clock and instruction execution timing, etc., from a case where the cache memory is valid and therefore, it becomes impossible to realize an accurate debugging.

In order to make a trace possible while the cache memory being valid, a conventional microprocessor with cache memory is equipped with exhibit terminals for indicating whether or not execute start, branch instruction and branch address can be determined stationarily. A conventional trace analyzer holds an execution flow obtained by stationarily analyzing a program preliminarily and assembles dynamically instruction processing sequence according to the execution flow on the basis of signal supplied from the respective exhibit terminals.

With such construction as mentioned above, the conventional microprocesor with cache memory can realize a trace when the cache memory is fixed in an invalid or valid state. However, for a program for an application such as robot control or game in which use of microprocessor is becoming popular and in which a cache memory is validated or invalilated dynamically, a method for analyzing state of program execution must be changed dynamically.

Therefore, most of the conventional microporocessor with cache memory includes a terminal for externally setting the cache memory in valid or invalid state and an internal register capable of setting the cache memory in valid or invalid state according to an execution result of an instruction or an internal state of the microprocessor, so that the validity of the cache memory is determined under a combined condition of the both.

A conventional trace analyzer for analyzing operational history of such microprocessor requires a hardware for reading out the internal register by means of a software and determining, from the content of the register and external setting signals, whether or not the cache memory is validated. Such hardware may become of large size and can not guarantee a real time analysis of the above mentioned operational history. Therefore, it is not suitable to trace a program in a apparatus which requires such real time characteristics.

### BRIEF SUMMARY OF THE INVENTION

### Object of the Invention

An object of the present invention is to provide a trace analyzer which determines a validity or invalidity of cache memory immediately and facilitates an accurate debugging of a program to be executed on real time basis.

### Summary of the Invention

A microprocessor with cache memory according to the present invention has a mode exhibit terminal for externally indicating whether or not the cache memory is valid. A signal at this terminal is supplied to a mode detection mechanism for detecting whether or not the cache memory is valid. The mode detection mechanism is set externally through a cache memory validating terminal or set by a result of execution of instruction or an internal state of a microprocessor.

Preferably, the microprocessor with cache memory according to the present invention includes a terminal for externally indicating whether or not an execution start, a branch generation and a branch address can be stationarily determined.

A trace analyzer according to the present invention is featured by that a trace method of the microprocessor is changed immediately according to a decision of whether or not the cache memory is valid.

Preferably, the trace analyzer according to the present invention holds an execution flow obtained preliminarily by stationarily analyzing a program and traces it according to a signal from a microprocessor which is indicative of whether or not execution start, branch generation and branch address can be stationarily determined, by assembling execution sequence of instructions dynamically. In a case of a branch whose address can not be determined stationarily, an interrupt is generated in the microprocessor.

Further, the trace analyzer according to the present invention preferably stops a tracing operation when the cache memory is validated.

### Brief Description of the Drawings

The above-mentioned and other objects, features and advantages of the present invention will become more apparent by reference to the following detailed description of the present invention taken in conjunction with the accompanying drawings, wherein:
Fig. 1 is a block circuit diagram of a first trace system constituted with a microprocessor with cache memory and a trace analyzer according to a first embodiment of the present invention;
Fig. 2 is a block diagram of the microprocessor shown in Fig. 1;
Fig. 3 is a flowchart explaining an operation of the trace analyzer shown in Fig. 1; and
Fig. 4 is a block circuit diagram of a second trace system constituted with a microprocesor with cache memory and a trace analyzer according to a second embodiment of the present invention.

### DETAILED DESCRIPTION OF THE INVENTION

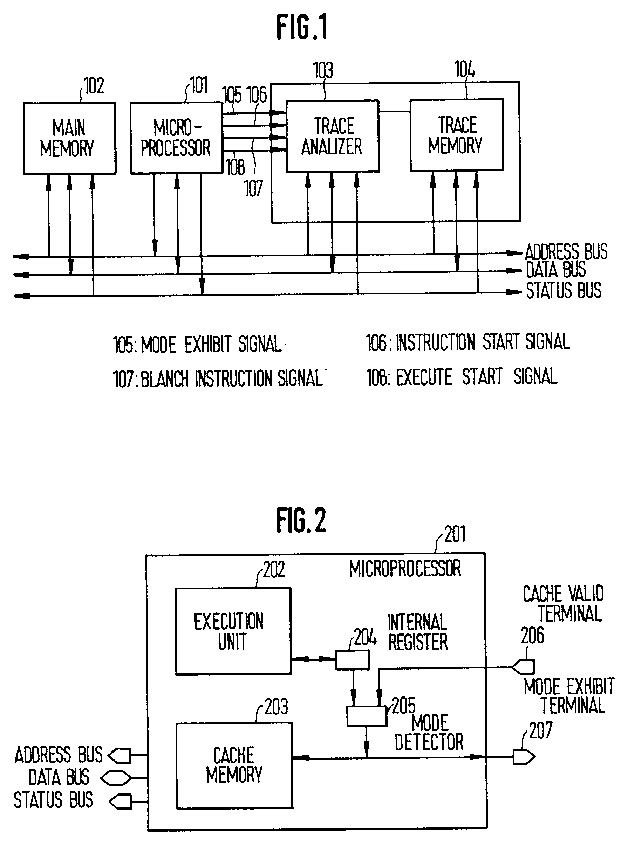

A first trace system of the present invention shown in Fig. 1 is constituted with a microprocessor 101, a main memory 102, a trace analyzer 103 and a trace memory 104, which are connected to each other through an address bus, a data bus and a status bus, etc. The microprocesor 101 supplies a mode exhibit signal 105, an instruction start signal 106, a branch instruction signal 107 and an execute start signal 108 to the trace analyzer 103.

A microprocessor 201 shown in Fig. 2 shows a detail of the microprocessor 101 in Fig. 1 and includes an execution unit 202, a cache memory 203, an internal register 204, a mode detector 205, a cache validation terminal 206 and a mode exhibit terminal 207. The instruction start signal 106, the branch instruction signal 107 and the execute start signal 108 shown in Fig. 1 are omitted in Fig. 2 for simplicity of illustration.

The main memory 102 stores a program to be debugged and data (instructions) of a portion in the main memory 102 are loaded in the cache memory 203 every unit of fixed block of data having successive addresses. In a valid state of the cache memory 203, the execution unit 202 accesses the cache memory 203 for a case of cache hit and the main memory 102 in a case of cache mishit. Instructions including an instruction read out from the main memory 102 are loaded in the cache memory 203 in the case of cache mishit.

The execution unit 202 executes instruction read out and sets a validity or invalidity of the cache memory 203 in the internal register 204 according to a result of the execution of the instruction. It should be noted that the internal register 204 can be set with validity or invalidity of the cache memory 203 according to other internal state of the microprocessor 202.

An output of the internal register 204 is supplied to the mode detector 205. The mode detector 205 is also supplied with an external instruction indicating validity or invalidity of the cache memory 203 from a cache valid terminal 206. An output of the mode detector 205 is supplied to the cache memory 203 and a mode exhibit terminal 207 and exhibited externally immediately. A signal on the mode exhibit terminal 207 is supplied to the trace analyzer as a mode exhibit signal 105 exhibiting whether or not the cache memory 203 is valid. The trace analyzer 103 responds to the mode exhibit signal 105 to determine a trace method and stores execution history of the program in the trace memory 104.

Prior to start of debugging, the trace analyzer 103 reads the program in the main memory 102 and analyses it to obtain a stationary execution flow thereof which is then stored. This execution flow comprises address of the main memory 102 corresponding to a value of a program counter and branch address when branched. However, the execution flow can not deal with dynamic branch instruction whose branch address is determined based on an execution result of instruction.

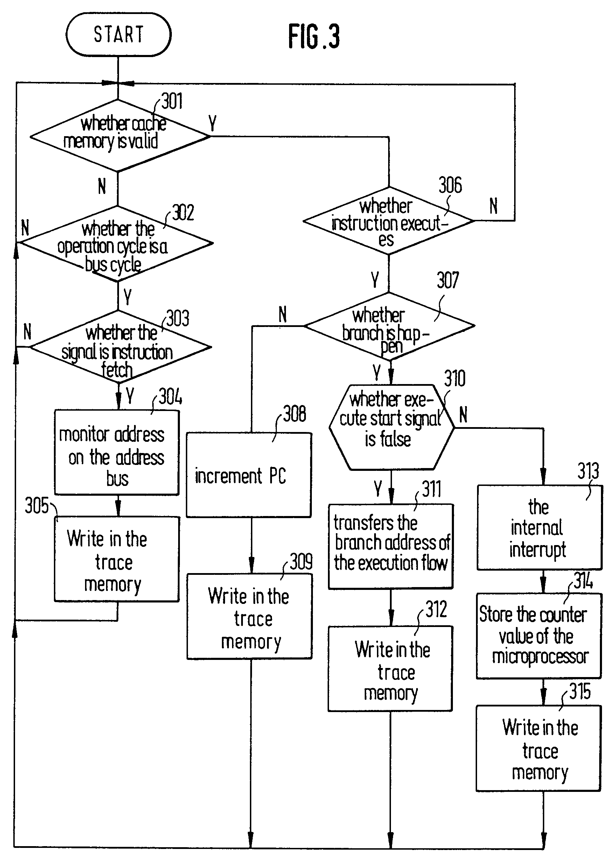

An operation of this embodiment will be described for two cases where the cache memory is valid and invalid, respectively, with reference to Fig. 3 which is a flowchart showing a trace operation of the trace analyzer 103 shown in Fig. 1.

### (1) Cache Memory Invalid

The microprocessor 101 provides an address and a status signal of an instruction onto the address bus and the status bus, respectively, when it executes the instruction according to the program and the main memory 102 outputs data (instruction) corresponding to the address on the address bus to the data bus. The microprocessor 101 reads the data on the data bus and executes the instruction.

In this example, the mode exhibit signal 105 does not indicate validity of the cache memory 203 (Step 301 in Fig. 3). The trace analyzer 103 monitors address on the address bus to determine whether the operation cycle is a bus cycle (Step 302) and, since, in this example, it is the bus cycle, monitors the status signal to determine whether the signal is instruction fetch (Step 303). If it determines in the step 303 that the instruction is fetch as in this example, the trace analyzer 103 monitors address on the address bus (Step 304) and writes the address in the trace memory 104 (Step 305). Thus a trace of instruction can be completed.

### (2) Cache Memory Valid

In this case, when cache hit is generated, the microprocessor 101 does not access to the main memory 102. Therefore, the trace analyzer 103 can not know an information indicative of progression of instruction processing by monitoring the buses. Further, even if cache mishit is generated and the microprocessor 101 accesses the main memory 102, the microprocessor 101 not always executes an instruction read out from the main memory 102 on the data bus immediately. Therefore, the trace analyzer 103 changes the instruction trace method by selectively using the internal program counter, the execution flow and the interrupt mechanism which are previously obtained according to the kind of instruction as mentioned below:

### (2.1) No Branch Instruction

The execution unit 202 reads the cache memory 203 sequentially according to a value of the internal program counter and executes the instruction. Address of the main memory 101 corresponding to the value of the program counter can be known from the execution flow preliminarily obtained. The value of the internal program counter is, of course, maintained at the same value as that of the program counter in the execution unit 202.

The trace analyzer 103, when detects that the execute start signal 108 is true (Step 310), generates an interrupt in the microprocessor 101 by means of the internal interrupt mechanism (Step 313). Then, the trace analyzer 103 stores, in its own program counter, the counter value of the microprocessor 101 (Step 314) and writes an address of the main memory 102 corresponding thereto in the trace memory 104 (Step 315). Thus, a trace can be completed.

### (2.2) Branch Instruction to Address Determinable Stationarily by Instruction

Branch instruction to an address which can be determined by instruction stationarily means that the instruction can determine it prior to execution thereof by analysis of the program Thus, when the program is branched to such address, processing is performed based on a value which is substantially different from the preceding program counter value. Therefore, the trace analyzer 103, when detects that the execute start signal 108 is false (step 310), transfers the branch address of the execution flow which is preliminarily obtained to the program counter (Step 311) and writes it in the trace memory 104 (Step 312). Thus the instruction trace can be done.

### (2.3) Branch Instruction to Address not Determinable Stationarily by Instruction

In this case, there is no data to be traced in the trace analyzer 103. This is because the execution flow preliminarily obtained is stationary, that is, corresponds to only branch instruction whose branch address is preliminarily known.

The trace analyzer 103, when detects that the execute start signal 108 is true (Step 310), generates an interrupt in the microprocessor 101 by means of the internal interrupt mechanism (Step 313). Then, the trace analyzer 103 stores, in its own program counter, the counter value of the microprocessor 101 (Step 314) and writes an address of the main memory 102 corresponding thereto in the trace memory 104 (Step 315). Thus, a trace can be completed. It should be noted that, when interrupt branch is generated, interrupt address is set in the program counter of the microprocessor 101.

It should be noted that the last steps 305, 309, 312 and 315 of the respective four cases described above are returned to the first step 301 of the flowchart. That is, since it is determined again in the step 301 whether or not the cache memory 103 is valid, the tracing method can be dynamically changed.

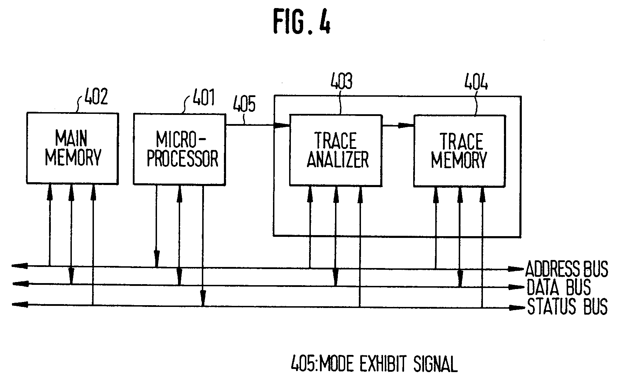

The second trace system shown in Fig. 4 has a similar construction to that shown in Fig. 1 except that the execution start signal 106, the branch instruction generating signal 107 and the execute start signal 108 are removed. With the construction shown in Fig. 4, a trace analyzer 403 stops a trace when a cache memory is valid. This is because the trace analyzer 403 can not obtain information necessary for trace when the cache memory is valid.

Therefore, the construction of the trace analyzer 403 can be simplified compared with that shown in Fig. 1 since there is no need of providing such previous analysis function of program as included in the trace analyzer 103 shown in Fig. 1 and, when a result of the decision step 301 of the flowchart shown in Fig. 3 is "Y", it returns to the step 301. In this embodiment, construction of a microprocessor 401 shown in block form in Fig. 4 is the same as that shown in Fig. 2.

In this embodiment, an operation when the cache memory is not valid is the same as that of the first embodiment.

The trace is stopped when the cache memory is made valid and started again when it is made invalid. That is, the trace analyzer 403 is simplified by interrupting the trace during the cache memory is valid.

Since reason for interruption of trace is known, a later debugging is relatively easy. It may be possible to use the previously mentioned trap or single-step method for such debugging.

As mentioned hereinbefore, according to the present invention, a precise debugging of a program to be executed in real time by a microprocessor can be done easily by slightly modifying a microprocessor and a trace analyzer.

Although the present invention has been described with reference to specific embodiments, this description is not meant to be construed in a limiting sense. Various modifications of the disclosed embodiments, will become apparent to persons skilled in the art upon reference to the description of the present invention. It is therefore contemplated that the appended claims will cover any modifications or embodiments as fall within the true scope of the present invention.

## Claims

1. A microprocessor with cache memory, comprising:
an internal register adapted to be set with a cache memory valid or a cache memory invalid according to a result of execution of instruction or an internal state;
a mode detecting mechanism for detecting whether or not said cache memory is valid according to a content of said internal register; and
a mode exhibit terminal for externally indicating an output of said mode detecting mechanism.

2. The microprocessor claimed in claim 1, further comprising a cache valid terminal for externally indicating to said mode detecting mechanism whether said cache memory is valid or invalid.

3. The microprocessor claimed in claim 1, further comprising a plurality of terminals for externally indicating whether or not an execution start, a branch generation and a branch address can be determined stationarily.

4. A trace analyzer for use with the microprocessor claimed in claim 1, wherein a trace method of said microprocessor is changed in response to a signal on a mode exhibit terminal.

5. The trace analyzer claimed in claim 4 for use with the microprocessor claimed in claim 3, further comprising an execution flow obtained by preliminarily analyzing a program stationarily and an interrupt generating mechanism for generating an interrupt for a case of said branch where said branch address can not be determined stationarily, and wherein, when said signal on said mode exhibit terminal indicates that said cache memory is valid, a trace of said microprocessor is performed by dynamically assembling instruction execution sequence on the basis of said execution flow or said interrupt generating mechanism according to an indication whether or not said execution start, branch generation and branch address can be determined stationarily.

6. The trace analyzer claimed in claim 4 for use with the microprocessor claimed in claim 1, wherein, when said signal on said mode exhibit terminal indicates that said cache memory is valid, a trace of said microprocessor is stopped.
